# EUROPEAN PATENT APPLICATION

(11) **EP 4 328 116 A1**
(43) Date of publication of application: **28.02.2024**
(21) Application number: 22790619.5
(22) Date of filing: 22.04.2022
(51) Int. Cl.: B62D 21/07, B62D 21/02, B62D 21/00

(54) **STRINGER FOR VEHICLE CHASSIS, STRINGER ASSEMBLY, AND VEHICLE CHASSIS**

(30) Priority: 22.04.2021 BR 102021007734
(71) Applicant: Iochpe-Maxion S.A., 12702-330 Cruzeiro (BR)
(72) Inventor: LOPES, Carlos Eduardo, 12702-460 Cruzeiro - SP (BR); BARBOSA CARNEIRO DE LIMA, Raphael, 12.760-000 Lavrinhas - SP (BR); DA SILVA BRAZ, Luiz Gustavo, 12791-190 Cruzeiro - SP (BR); TAVARES DE OLIVEIRA, Vladmir, 12.702-180 Cruzeiro - SP (BR)
(74) Representative: Millburn, Julie Elizabeth
(86) International application number: PCT/BR2022/050135
(87) International publication number: WO 2022/221931

(57) **Abstract**

The present invention refers to a vehicle chassis stringer, a vehicle chassis stringer assembly, and a vehicle chassis, wherein the stringer comprises a "C" shaped cross section horizontally downwards. The vehicle chassis comprises at least two stringer assemblies; and at least one crossbar, wherein each of the at least two stringer assemblies comprises a stringer and a set of central reinforcing members, wherein the stringer comprises a "C" shaped cross section horizontally downwards and the set of central reinforcing members comprises an "I" shaped cross section.

## Description

The present invention refers to a vehicle chassis stringer and a vehicle chassis containing at least one stringer.

### Description of the State of the Art

Vehicle chassis are essential structures in the assembly of cars, trucks, buses, motorcycles, among others. They are the basic structures that connect most of the vehicle components and provide structural integrity to the vehicle. Components such as engine, transmission, axles, wheels, body, etc. are assembled on the chassis.

Apart from the constructive importance of the connection of the components, the chassis has important structural characteristics related to the safety of the passengers in a vehicle. In case of an external impact, the chassis helps protect the passengers inside the vehicle.

Thus, the chassis must comprise an efficient design, which allows the correct interaction of the vehicle components, and a robust structure able to support the weight of these components, the loads related to the use of the vehicle and impacts resulting from collisions. Other characteristics desired in chassis include construction with easily manufactured elements for reducing costs and lightness for increasing the efficiency of the vehicle. Additionally, a versatile chassis that is able to adapt to different needs in length and width represents a significant advantage in the market.

An example of chassis described in the state of the art is presented in document US20020163173. In this patent publication there is described a vehicle frame comprising a reduced number of parts aiming at obtaining low manufacturing costs and a light assembly. The chassis described in the mentioned document uses a plurality of stringers with square transverse section with inverted "U" shaped connecting elements.

By presenting stringers with square transverse section and the need for connecting elements to reinforce the interconnections, the chassis described in the mentioned document is not able to considerably reduce the weight of a traditional chassis. Additionally, there are not described elements that contribute to increase the structural reinforcement against lateral impacts. Neither are there described structural reinforcements against specific point loads nor characteristics which bring versatility to the chassis.

Another example of chassis is described in document DE102017101561. This publication describes a chassis for an electric motor vehicle. Electric vehicles have a different load distribution from the usual vehicles and, therefore, present different constructive configuration from the one found in vehicles having internal combustion engines. As can be seen in the mentioned publication, the chassis has a substantially horizontal construction with reinforcements around the batteries and in the front region.

Despite increasing the resistance against frontal impacts, the chassis of the mentioned publication does not describe elements and reduced weight or ease of manufacture. Additionally, there are no characteristics that allow the increase of the resistance of the chassis against lateral impacts.

Document EP1378421 describes a chassis with extended stringers and internal structural reinforcing members, whereby the stringers have a "C" shaped construction and the internal reinforcing members thereof are "W" or "L" shaped. There is also described a "K" shaped cross-piece. In this example, despite the cited structural reinforcements, there are also not described characteristics which allow achieving a reduction in weight added to ease of manufacture and increase in strength.

Considering the documents of the state of the art which describe chassis for both electric and fossil fuel vehicles, there were not identified chassis able to satisfy the design needs of electric vehicles, of substantially reducing weight without relinquishing structural resistance, presenting satisfactory resistance against lateral impacts and/or of presenting good torsional rigidity. There were not identified either chassis comprising stringers able to extend longitudinally and laterally, with a facilitated manufacturing configuration and reduced cost, and further, with optimized structural capacity in the more demanding areas.

### Objects of the Invention

In view of the problems described in the state of the art, the present invention has the purpose of providing a chassis configured for use in traditional and/or electric vehicles with robustness and lightness.

Another purpose of the chassis of the present invention is to comprise easily manufactured elements which result in reduction in time and costs, such as, for example, a stringer with "C" shaped cross section horizontally downwards.

Another purpose of the present invention is to increase the resistance to lateral impacts without increasing the complexity or weight of the chassis, by means or elements, such as, for example, the stringer with largest moment of inertia of horizontal area.

Another purpose of the present invention is to provide a chassis with the ability to receive specific reinforcements which result in an increase of the resistance to specific load for the design of the vehicle, without significantly increasing the total weight of the structure and without altering the basic configuration thereof.

Additionally, it is a purpose of the present invention to provide a versatile chassis able to have the length and/ or width thereof altered according to the needs of the design without the need for replacing important parts, such as, for example, the stringers.

Another purpose of the present invention is to provide a chassis with good torsional rigidity by means of, for example, special crossbars and full rigidity of the set by means of, for example, side and lower closures.

### Brief Description of the Invention

The purposes of the present invention are achieved by a vehicle chassis stringer, which comprises: a rear stringer member; a front stringer member; and a central stringer connection, wherein the rear stringer member and the front stringer member are coupled to the central stringer connection, wherein the rear stringer member, the front stringer member and the central stringer connection comprise a "C" shaped cross section horizontally downwards formed by at least one upper flat surface and flat side surfaces.

Optionally, the rear stringer member comprises a rear end portion, a rear curved portion and a first part of central portion, wherein the rear end portion and the first part of the central portion are intermediated by rear curved portion, wherein the rear curved portion comprises a wider upper wall than the upper walls of the rear end portion and the first part of the central portion.

Optionally, the front stringer member comprises a front end portion, a front curved portion and a second part of the central portion, wherein the front end portion and the second part of the central portion are intermediated by the front curved portion, wherein the front curved portion comprises a wider upper wall than the upper walls of the front end portion and the second part of the central portion.

Optionally, the front end portion, the front curved portion and the second part of the central portion of the front stringer member comprise flat upper walls in the same horizontal plane.

Optionally, the longitudinal axis of the first part of the central portion is aligned with the longitudinal axis of the second part of the central portion.

Optionally, the total length of the stringer is altered by the variation in length of the central stringer connection.

The purposes of the present invention are also achieved by a vehicle chassis stringer assembly which comprises: a stringer; and a set of central reinforcing members, wherein the stringer comprises two end portions, two curved portions and a central portion, wherein the two curved portions intermediate the two end portions and the central portion, wherein the set of central reinforcing members is coupled on the central portion and in part of the curved portions of the stringer.

Optionally, the stringer comprises a "C" shaped cross section horizontally downwards.

Optionally, the set of central reinforcing members comprises a rear reinforcing member, a central reinforcing connection and a front reinforcing member, wherein the rear reinforcing member and the front reinforcing member are coupled to the central reinforcing connection, and wherein the rear reinforcing member, the front reinforcing member and the central reinforcing connection comprise vertically elongated bodies which comprise upper and lower flaps, so as to form an "I" shaped cross section.

Optionally, the set further comprises an "L" shaped internal reinforcing member coupled to the stringer and to the set of central reinforcing members.

The purposes of the present invention are also achieved by a vehicle chassis, which comprises: at least two stringer assemblies; and at least one crossbar, wherein each one of the at least two stringer assemblies comprises a stringer and a set of central reinforcing members, wherein the stringer comprises a "C" shaped cross section horizontally downwards and the set of central reinforcing members comprises an "L" shaped cross section, wherein the at least one crossbar comprises at least one among an "X" 420 shaped crossbar and an "H" 440 shaped crossbar.

Optionally, the vehicle chassis comprises two crossbars, wherein the crossbars comprise a shape selected from at least one among an "X" 420 shaped crossbar and an "H" 440 shaped crossbar.

Optionally, the vehicle chassis comprises a set of closure reinforcing members, wherein the set of closure reinforcing members comprises side closure reinforcing members and a lower reinforcing member.

### Brief Description of the drawings

The present invention will now be described in greater detail, based on a sample of execution represented in the drawings. The figures show:
Figure 1 - is a perspective view of an embodiment of the vehicle chassis of the present invention;
Figure 2 - is a lower perspective view of an embodiment of the vehicle chassis of the present invention;
Figure 3 - is a perspective view of an embodiment of the stringer assembly of the present invention;
Figure 4 - is a side view of an embodiment of the stringer assembly of the present invention;
Figure 5 - is an exploded view of an embodiment of the stringer assembly of the present invention;
Figure 6 - is an exploded view of an embodiment of the set of central reinforcing members of the present invention;
Figure 7 - is a perspective view of an embodiment of the stringer of the present invention;
Figure 8 - is an exploded view of an embodiment of the stringer of the present invention;
Figure 9 - is a perspective view of an embodiment of front stringer member of the present invention;
Figure 10 - is an exploded view of an embodiment of the front stringer member of the present invention;
Figure 11 - is a perspective view in detail of the front stringer member according to an embodiment of the present invention;
Figure 12a - is a cross-section view of an embodiment of the front stringer member of the present invention;
Figure 12b - is a cross section view of an embodiment of the front stringer member of the present invention;
Figure 12c - is a cross section view of an embodiment of the front stringer member of the present invention;
Figure 13 - is a perspective view of a cross section detail of the central portion of the stringer assembly according to an embodiment of the present invention;
Figure 14 - is a front view in cross-section detail of the central portion of the stringer assembly according to an embodiment of the present invention;
Figure 15 - is a perspective view of a cross section detail of the rear end portion of the stringer rear member according to an embodiment of the present invention;
Figure 16 - is a front view of a cross section detail of the rear end portion of the stringer rear portion according to an embodiment of the present invention;
Figure 17a - is a cross section view of an embodiment of the central portion of the present invention;
Figure 17b - is a cross section view of an embodiment of the central portion of the present invention;
Figure 17c - is a cross section view of an embodiment of the central portion of the present invention;
Figure 17d - is a cross section view of an embodiment of the central portion of the present invention;
Figure 17e - is a cross section view of an embodiment of the central portion of the present invention;
Figure 18a - is a cross section view of an embodiment of the central portion of the present invention;
Figure 18b - is a cross section view of an embodiment of the central portion of the present invention;
Figure 18c - is a cross section view of an embodiment of the central portion of the present invention;
Figure 18d - is a cross section view of an embodiment of the central portion of the present invention;
Figure 19 - is a perspective view of an embodiment of the crossbar of the present invention;
Figure 20 - is a perspective view of an embodiment of the crossbar of the present invention;
Figure 21 - is a perspective view of an embodiment of the crossbar of the present invention;
Figure 22 - is a perspective view of an embodiment of the crossbar of the present invention;
Figure 23 - is a perspective view of an embodiment of the vehicle chassis of the present invention;
Figure 24 - is a perspective view of an embodiment of the vehicle chassis of the present invention;
Figure 25 - is a perspective view of an embodiment of the vehicle chassis of the present invention;
Figure 26 - is a perspective view of an embodiment of the set of closure reinforcing members of the vehicle chassis of the present invention;
Figure 27 - is an exploded view of an embodiment of the set of closure reinforcing members of the vehicle chassis of the present invention;
Figure 28a - is a side view of an embodiment of the stringer assembly of the present invention;
Figure 28b - is a side view of an embodiment of the stringer assembly of the present invention; and
Figure 29 - is a lower perspective view of an embodiment of the stringer of the present invention.

### Detailed Description of the Drawings

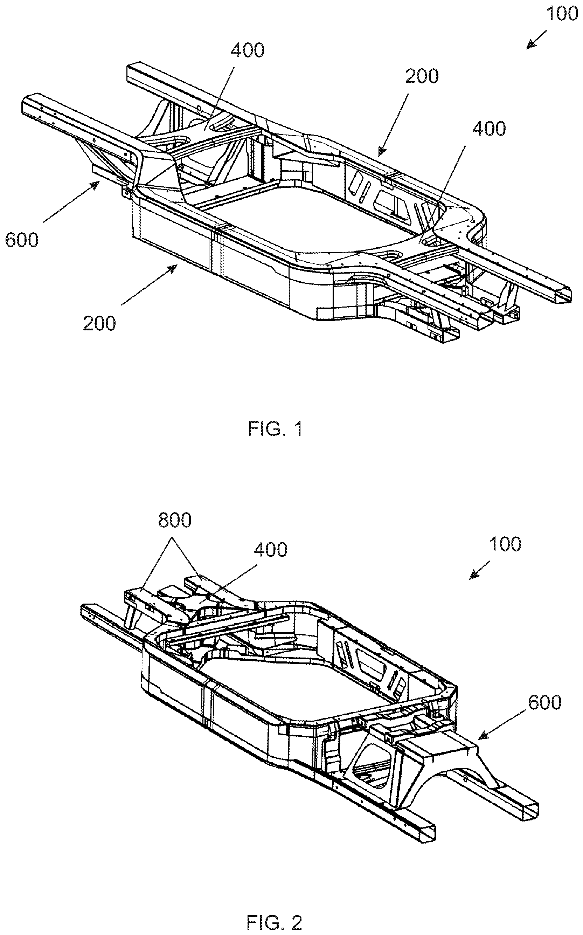

Figures 1 and 2 illustrate the vehicle chassis 100 according to an embodiment of the present invention. Chassis 100 of the present invention comprises at least two stringer assemblies 200, at least one crossbar 400 and at least one set of closure reinforcing members 600. Each one of these parts of chassis 100 will be described in detail below.

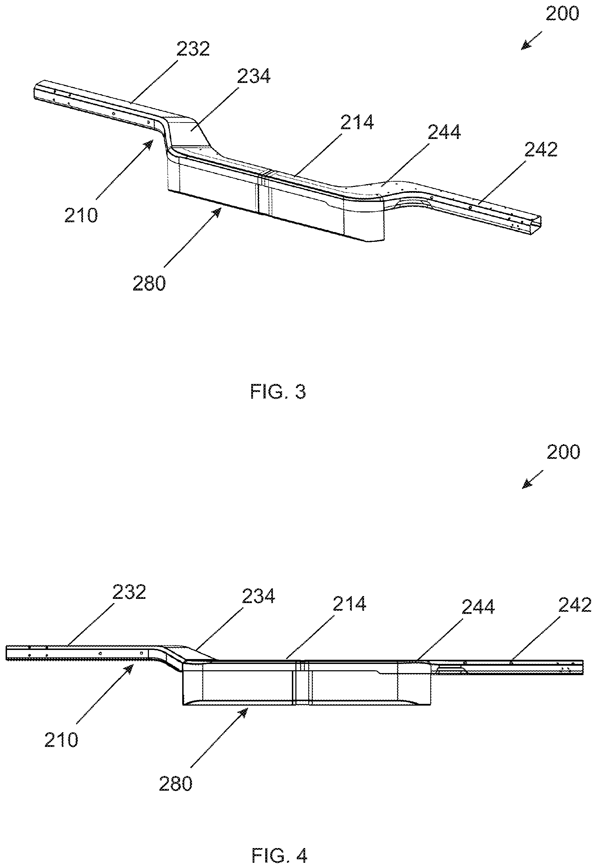

Figures 3, 4 and 5 illustrate the stringer assembly 200 in a perspective view, a side view, and an exploded view, respectively. The stringer assembly 200 of chassis 100 of this embodiment of the present invention comprises a stringer, a set of central reinforcing members 280 and an internal reinforcing member 290.

The stringer comprises an elongated body in the longitudinal direction of chassis 100. The body of the stringer is divided in two end portions 232,242 and a central portion 214, whereby the end portions 232, 242 are separated from the central portion 214 by curved portions 234, 244, that is, the two curved portions 234, 244 intermediate the two end portions 232, 242 and the central portion 214. The end portions 232, 242 and the central portion 214 have substantially parallel longitudinal axes. The curved portions 234, 244 are configured to shift the longitudinal axis of central portion 214 of the stringer of the longitudinal axes of the end portions 232, 242 in horizontal plane. In this embodiment, the longitudinal axis of the stringer central portion 214 is shifted outwards in relation to the center of mass of chassis 100.

In the present embodiment, the end portions 232, 242, the central portion 214, and the curved portions 234, 244 of the stringer comprise substantially flat upper walls. Additionally, the upper wall of central portion 214, the upper wall of the at least one end portion and the upper wall of at least one curved portion are comprised in a same horizontal plane, as can be better observed in figure 4. Figure 4 additionally shows that the end portions 232, 242 and the central portion 214 are comprised within horizontal parallel planes. In this way, the chassis 100 comprising the stringer 210 of the present invention is a substantially flat chassis 100 able to satisfy traditional and electric vehicle designs.

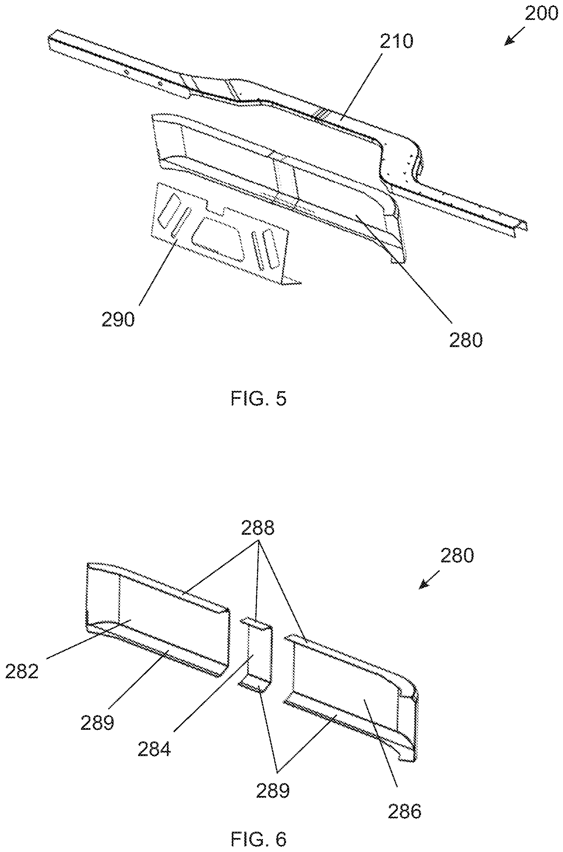

The set of central reinforcing members 280 is configured to be coupled to the lower region of stringer 210. In this embodiment, the set of central reinforcing members 280 is coupled to central portion 214 and in part of the curved portions 234, 244 of stringer 210. In this way, the set of central reinforcing members 280 provides greater rigidity and mechanical resistance to these portions, which are usually more demanded mechanically due to the distance thereof from the wheel axles. The set of central reinforcing members 280 will be described in detail ahead in the description of figure 6.

In the present embodiment, the stringer assembly 200 further comprises the internal reinforcing member 290 (figure 5) coupled to stringer 210 and to the set of central reinforcing members 280. The internal reinforcing member 290 comprises an "L" profile or an "I" profile, depending on the needs of the design. Additionally, internal reinforcing member 290 comprises a body with openings in several shapes configured to reduce the total weight thereof without resulting in a relevant reduction in its resistance.

Figure 6 illustrates an exploded view of the set of central reinforcing members 280 according to an embodiment of the present invention. The set of central reinforcing members 280 comprises a rear reinforcing member 282, a central reinforcing connection 284 and a front reinforcing member 286. The rear reinforcing member 282 and the front reinforcing member 286 are coupled to the central reinforcing connection 284. The rear reinforcing member 282, the front reinforcing member 286 and the central reinforcing connection 284 comprise vertically elongated bodies which comprise upper and lower flaps 288 so as to form an "I" shaped cross section. Said configuration provides a greater moment of inertia of vertical area so as to reinforce the vertical rigidity of stringer 210 on central portion 214.

Rear reinforcing member 282 and front reinforcing member 286 further comprise elongated bodies in the longitudinal direction of chassis 100 so as to reinforce all the central portion 214 and part of the curved portions 234, 244 of stringer 210. Both the rear reinforcing member 282 and the front reinforcing member 286 comprise regions with curvature which accompany the curvatures of the curved portions 234, 244 of stringer 210.

Upper flaps 288 are configured to attach to the lower region of stringer 210 and present a preferred 90° angulation. Lower flaps 289 are configured to increase the moment of inertia of the vertical area of the set of central reinforcing members 280 and present an angulation of 90° to 180° in relation to the vertical bodies of the respective parts. Lower flaps 289 can present multiple walls depending on the needs of the chassis 100 design.

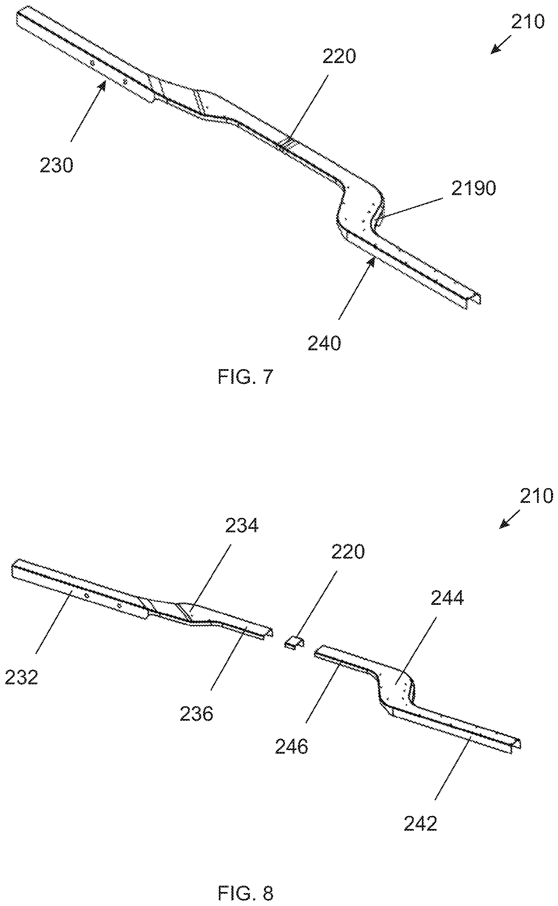

Figures 7 and 8 illustrate the stringer 210 of the present invention in perspective and exploded views respectively. As already described, stringer 210 comprises two end portions 232, 242, a central portion 214 and two curved portions 234, 244. Additionally, in this embodiment of the present invention, stringer 210 comprises a central stringer connection 220, a rear stringer member 230 and a front stringer member 240. Rear stringer member 230 and front stringer member 240 are attached to central stringer connection 220.

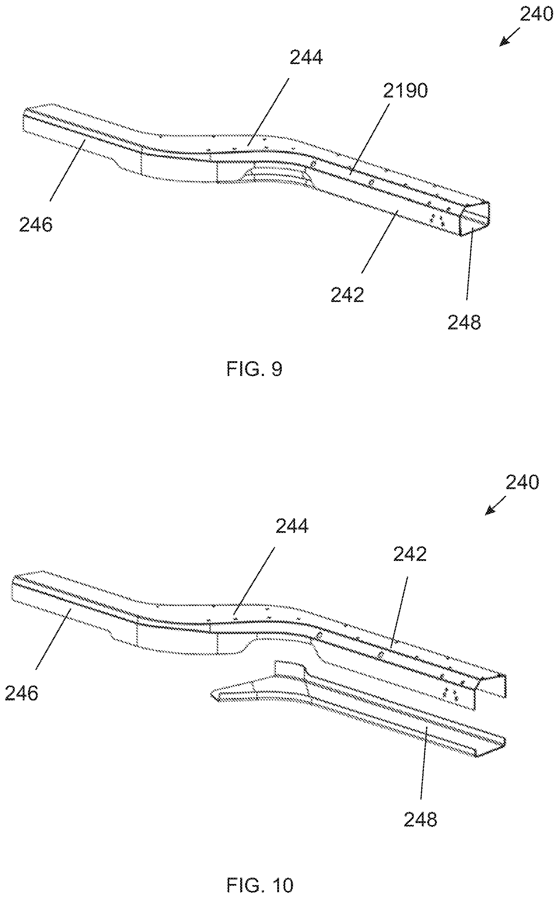

The rear stringer member 230, the front stringer member 240 and the central stringer connection 220 comprise a "C" shaped cross section horizontally downwards, that is, the stringer comprises a "C" shaped cross section horizontally downwards in all the extension thereof. This "C" shaped cross section horizontally downwards is formed by a horizontally elongated upper wall and two side walls elongated vertically downwards configuring a "C" shape horizontally with the opening turned toward the lower region of stringer 210. Additionally, stringer 210 comprises a bevel 2190 in at least one rim, being preferably on the outer rim of stringer 210. This bevel 2190 can be better observed in figure 9.

This configuration of the cross section of stringer 210 in "C" shape horizontally downwards provides to stringer 210 a greater moment of inertia of the horizontal area. In this way, the resistance against horizontal forces applied on stringer 210 of chassis 100 of the present invention is increased and the need for reinforcing members for protection against horizontal impacts is reduced. Consequently, the weight and complexity of the elements of stringer 210 of chassis 100 of the present invention are also reduced and chassis 100 as a whole presents a much more advantageous relation between weight and resistance.

The rear member of stringer 230 is comprised of a rear end portion 232, a rear curved portion 234 and a first part of central portion 236. The front member of stringer 240 is comprised of a front end portion 242, a front curved portion 244 and a second part of central portion 246.

As already described, the rear stringer member 230 and the front stringer member 240 are coupled to the central connection of stringer 220. More specifically, the rear stringer member 230 and the front stringer member 240 are attached to the stringer central connection 220 by means of the first part of central portion 236 and of second part of central portion 246. In this way, the first part of central portion 236, the second part of central portion 246 and the stringer central connection 220 form the central portion 214 of stringer 210.

In rear stringer member 230, the rear end portion 232 and the first part of central portion 236 are intermediated by rear curved portion 234. Rear curved portion 234 presents a curved shape in the horizontal plane to shift the longitudinal axis of rear end portion 232 of the longitudinal axis of the first part of central portion 236 in the horizontal plane. Additionally, the rear curved portion 234 comprises an upper wall that is wider than the upper walls of the rear end portion 232 and of the first part of central portion 236. Rear curved portion 234 also presents a slight inclination relative to the vertical plane so as to shift the longitudinal axis of rear end portion 232 of the longitudinal axis of the first part of central portion 236 in vertical plane. This characteristic can also be visualized in figure 4.

On the front member of stringer 240, front end portion 242 and the second part of central portion 246 are intermediated by front curved portion 244. Front curved portion 244 presents a curved shape in relation to the horizontal plane so as to shift the longitudinal axis of front end portion 242 of the longitudinal axis of second central portion 246 in horizontal plane. Additionally, front curved portion 244 comprises an upper wall that is wider than the upper walls of front end portion 244 and of the second part of central portion 246. Front curved portion 244, front end portion 242 and the second part of central portion 246 have flat upper walls comprised in the same horizontal plane so as to form a single plane horizontal upper wall for stringer front member 240.

Figures 9 and 10 illustrate an embodiment of the stringer front part 240 of the present invention in perspective and exploded views respectively. The stringer front member 240 comprises, apart from the characteristics already described a lower front stringer 248. Lower front stringer 248 is coupled to the front end portion 242 and to the front curved portion 244 of front stringer member 240. Lower front stringer 248 has an elongated body which comprises an end portion and a curved portion which accompany the shape of the front stringer member 240, wherein lower front stringer 248 is coupled. The cross section of lower front stringer 248 is a "C" shaped cross section horizontally upwards. In this way, when coupling lower front stringer 248 to front stringer member 240, the cross section of part of the stringer presents a beveled quadrilateral shape, the quadrilateral cross section being formed by the "C" shaped cross section horizontally downwards of front stringer member 240 and by "C" shaped cross section horizontally upwards of lower front stringer 248.

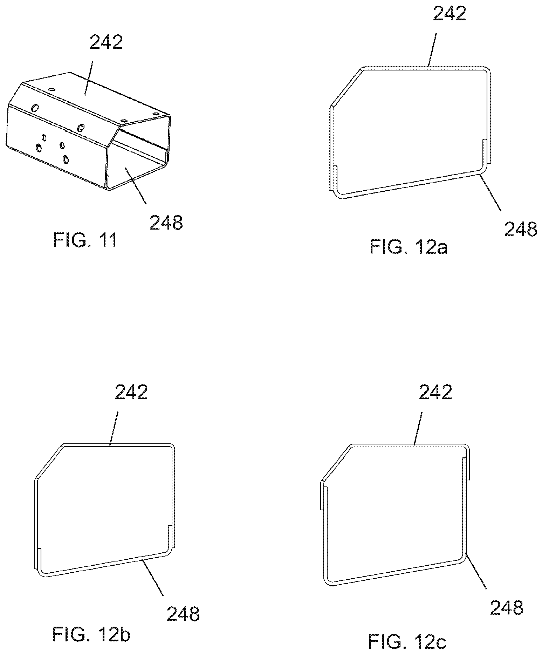

Figure 11 illustrates a detail of figure 9 wherein it is possible to observe the coupling between front stringer member 240 and lower stringer member 248 which forms the quadrilateral cross section already described. The quadrilateral cross section formed by the connection of the "C" shaped cross section horizontally downwards with the "C" shaped cross section horizontally upwards provides advantageously a moment of inertia of the upper horizontal area greater than the moment of inertia of the horizontal area obtained by the rectangular cross sections formed by the connection of the vertical "C" shaped cross sections known from the state of the art.

Figures 12a, 12b and 12c illustrate cross sections of the front stringer member 240 of stringer 210 of the present invention in different embodiments. In all the embodiments, the lower front stringer 248 comprises side walls and a lower wall. The vertical walls are substantially vertical. The lower wall presents an inclination in relation to the horizontal plane of the stringer, whereby the inclination of the lower wall is a decreasing inclination from inside to outside relative to the center of chassis 100.

Figure 12a illustrates an embodiment wherein the side walls of the front longitudinal portion comprise shorter lengths than the length of the upper wall of the front longitudinal portion and the lower front stringer 248 comprises side walls with shorter lengths than the length of the side walls of the front longitudinal portion.

Figure 12b illustrates an embodiment wherein the side walls of the front longitudinal portion comprise equal or greater lengths than the length of the upper wall of the front longitudinal portion and lower front stringer 248 comprises side walls with shorter lengths than the length of the side walls of the front longitudinal portion.

Figure 12c illustrates an embodiment wherein the side walls of the front longitudinal portion comprise shorter lengths than the length of the upper wall of the front longitudinal portion and lower front stringer 248 comprises side walls with greater length than the length of the side walls of the front longitudinal portion.

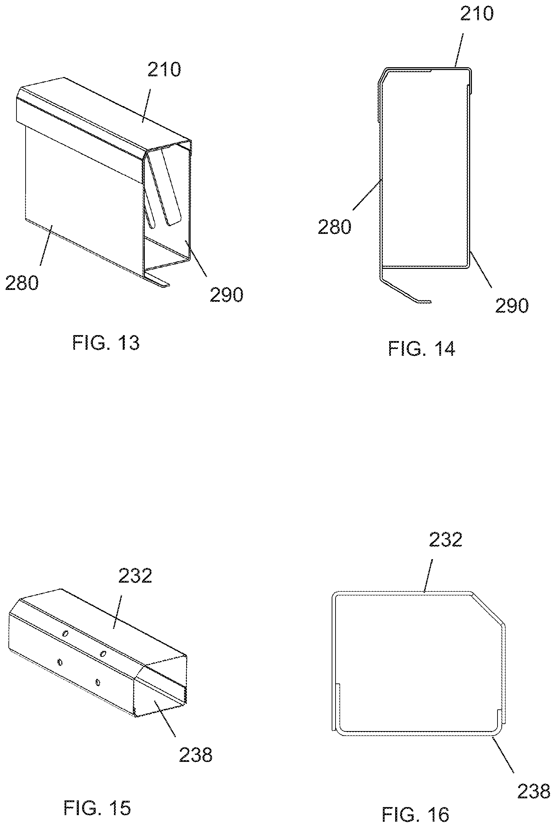

Figures 13 and 14 illustrate cross section perspective and front views respectively of central portion 214 of the stringer assembly 200 according to an embodiment of the present invention. In this embodiment, the stringer is coupled to the set of central reinforcing members 280 and the internal reinforcing member 290 and the set of central reinforcing members 280 is coupled to internal reinforcing member 290. These couplings result in a central portion 214 comprising a substantially rectangular cross section, wherein the substantially rectangular cross section comprises a vertical length greater than the horizontal length. Additionally, in this embodiment the lower flaps 289, which comprise an inclined portion and a horizontal portion, do not interact with internal reinforcing member 290 or with stringer 210.

The substantially rectangular configuration of central portion 214 of the stringer assembly 200 combining with the moment of inertia of vertical area of the set of central reinforcing members 280 with the moment of inertia of the horizontal area of stringer 210 with "C" shaped cross section horizontally downwards provides high vertical and horizontal rigidity to chassis 100 without the need for a significant increase in the weight of chassis 100.

Figures 15 and 16 illustrate cross section perspective and front views respectively of the rear end portion 232 of rear stringer member 230 according to an embodiment of the present invention. In this embodiment, the rear end portion 232 of rear stringer member 230 is coupled to a lower rear stringer 238. Lower rear stringer 238 comprises side walls and lower wall so as to form a "C" shaped cross section horizontally upwards.

The coupling of the rear end portion 232 of rear stringer member 230 with lower rear stringer 238 results in the rear stringer member 230 comprising a substantially square beveled cross section 2190, the substantially square cross section being formed by the "C" shaped cross section horizontally downwards of rear stringer member 230 and by "C" shaped cross section horizontally upwards of lower rear stringer 238.

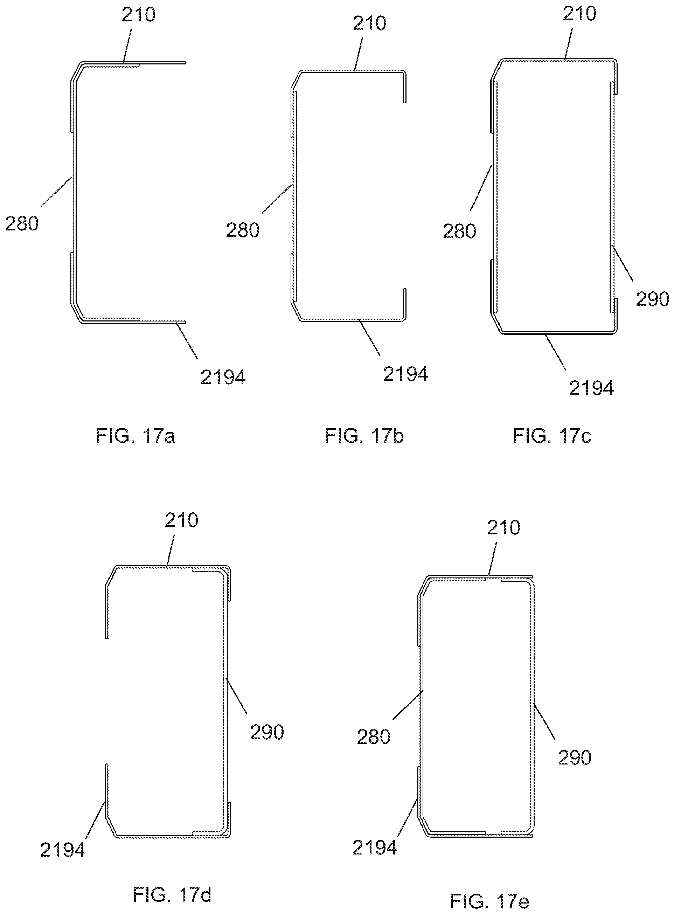

Figures 17a, 17b, 17c, 17d and 17e illustrate front cross section views of central portion 214 of stringer assembly 200 according to alternative embodiments of the present invention.

In the embodiment illustrated in figure 17a the stringer comprises an "L" shaped cross section horizontally downwards. In this embodiment, the set of central reinforcing members 280 comprises a "C" shaped vertical cross section. The stringer of the embodiment of figure 17a further comprises a lower complementary stringer coupled to the set of central reinforcing members 280. The lower complementary stringer comprises an "L" shaped cross section horizontally upwards.

In the embodiment illustrated in figure 17b the stringer comprises a "C" shaped cross section horizontally downwards. In this embodiment, the set of central reinforcing members 280 comprises a vertical "I" shaped cross section. The stringer of the embodiment of figure 17b further comprises a lower complementary stringer coupled to the set of central reinforcing members 280. The lower complementary stringer comprises a "C" shaped cross section horizontally upwards.

In the embodiment illustrated in figure 17c the stringer comprises a "C" shaped cross section horizontally downwards. In this embodiment, the set of central reinforcing members 280 comprises a vertical "I" shaped cross section. The stringer of the embodiment of figure 17c further comprises a lower complementary stringer coupled to the set of central reinforcing members 280. The lower complementary stringer comprises a "C" shaped cross section horizontally upwards. Additionally, the stringer of the embodiment of figure 17c comprises internal reinforcing member 290 with vertical "I" shaped cross section. In this case, internal reinforcing member 290 is coupled to the stringer and to the lower complementary stringer.

In the embodiment illustrated in figure 17d the stringer comprises a "C" shaped cross section horizontally downwards. In the embodiment of figure 17d the internal reinforcing member 290 comprises an inverted vertical "C" shaped cross section and it is coupled to the stringer. The stringer of the embodiment of figure 17d further comprises a lower complementary stringer coupled to the central reinforcing member. The lower complementary stringer comprises a "C" shaped cross section horizontally upwards.

In the embodiment illustrated in figure 17e the stringer comprises an "L" shaped cross section horizontally downwards. In this embodiment, the set of central reinforcing members 280 comprises a "C" shaped vertical cross section. The stringer of the embodiment of figure 17e further comprises a lower complementary stringer coupled to the set of central reinforcing members 280. The lower complementary stringer comprises an "L" shaped cross section horizontally upwards. Additionally, the stringer of the embodiment of figure 17e comprises internal reinforcing member 290 with inverted vertical "C" shaped cross section. In this case, internal reinforcing member 290 is coupled to the stringer and to the lower complementary stringer.

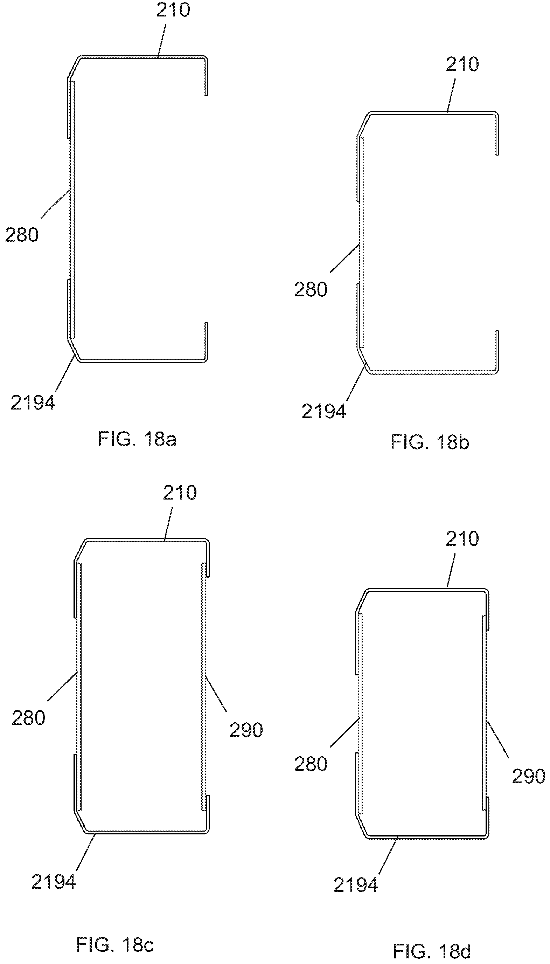

Figures 18a, 18b, 18c and 18d illustrate front cross section views of central portion 214 of the stringer assembly 200 according to different embodiments of the present invention. As can be observed, the set of central reinforcing members 280 and internal reinforcing member 290 the height thereof is altered. In this way, the height of stringer assembly 200 and, consequently, of chassis 100 can be altered. Thus, by comprising a set of central reinforcing members 280 and an internal reinforcing member 290 with variable heights, the stringer assembly 200 and/or the chassis 100 of the present invention can have their height altered to adapt to desired design conditions without the need for a structural modification of countless components of the more complex construction of chassis 100. Said characteristic grants versatility to chassis 100 of the present invention.

As already described, stringer 210 comprises a "C" shaped cross section horizontally downwards. This configuration creates an internal space in the lower region of stringer 210 defined by the upper wall and the side walls. In an embodiment, the stringer comprises additional reinforcing members 2192 in the internal region. The additional reinforcing members 2192 are plates coupled to the upper wall and to the side walls of stringer 210, whereby they may be coupled so as to have different inclination angles with the upper wall. The possibility of adding additional reinforcing members 2192 provides versatility to the stringer of the present invention in the sense of being able to adapt stringer 210 to the different rigidity needs of the designs.

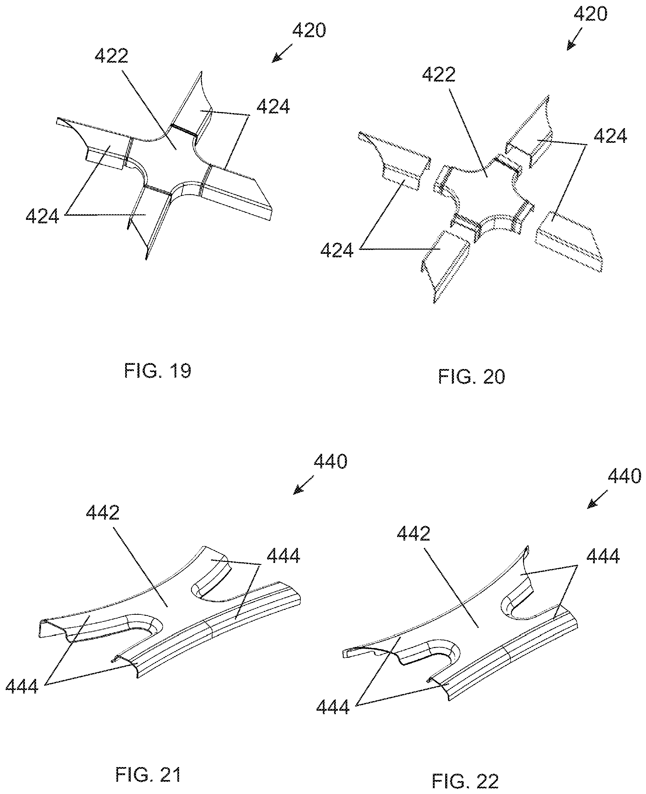

Figures19, 20, 21 and 22 illustrate perspective views of the crossbars of chassis 100 according to an embodiment of the present invention. As can be observed in figure 1, chassis 100 of the present invention comprises at least two stringer assemblies 200. The stringer assemblies 200 are connected by means of the crossbars.

Figures 19 and 20 illustrate a perspective view of an embodiment of the cross bar in "X" 420 shape. The "X" 420 shaped crossbar comprises a central crossbar element 422 and crossbar extensions 424 coupled to the central crossbar element 422. The extensions of crossbar 424 comprise a "C" shaped cross section horizontally downwards formed by an upper wall and side walls. Additionally, the extensions of crossbar 424 are coupled to stringers of chassis 100.

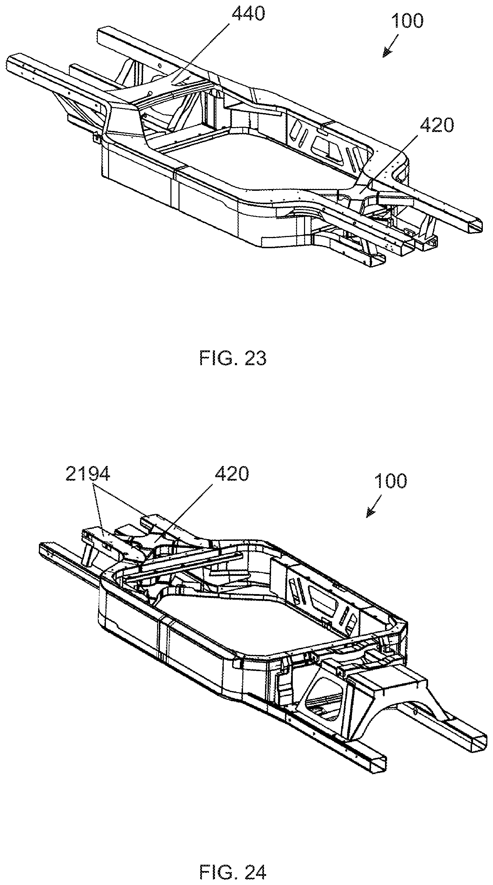

In an embodiment, the "X" 420 shaped crossbar is coupled to the front members of the stringer of chassis 100, more specifically to the front end portions 232, 242 and front curved portions 234, 244. This embodiment can be observed in figure 23.

In other embodiments, the "X" 420 shaped crossbar is coupled to other regions of the two stringer assemblies of chassis 100 of the present invention. Or further, a plurality of "X" shaped crossbars is coupled to a plurality of regions of the two stringer assemblies of chassis 100 of the present invention.

Figure 24 shows an example of embodiment comprising the "X" 420 shaped crossbar coupled to stringers of base 2194 of chassis 100 of the present invention. The stringers of base 2194 of chassis 100 of the present invention are stringers which comprise a "C" shaped cross section horizontally upwards and are coupled to lower flaps 289 of the set of central reinforcing members 280. The stringers of base 2194 of chassis 100 provide an additional coupling point of the crossbar so as to increase the rigidity of the assembly.

The "X" 420 shaped crossbar is a component which provides an increase of the torsional rigidity of chassis 100. This increase in torsional rigidity cannot be achieved by the single bar crossbars known from the state of the art.

Figures 21 and 22 illustrate a perspective view of an embodiment of the crossbar in "H" 440 shape. The "H" 440 shaped crossbar comprises a central connection region 442 and crossbar arms 444 which are a continuity of the central region of connection 442. The central connection region 442 and the crossbar arms 444 comprise a "C" shaped cross section horizontally downwards formed by an upper wall and a plurality of side walls. Additionally, the extensions of crossbar 424 are coupled to stringers of chassis 100.

In an embodiment, the "H" 440 shaped crossbar is coupled to the rear stringer members of chassis 100, more specifically to the rear end portions 232, 242 and to rear curved portions 234, 244. This embodiment can be observed in figure 23.

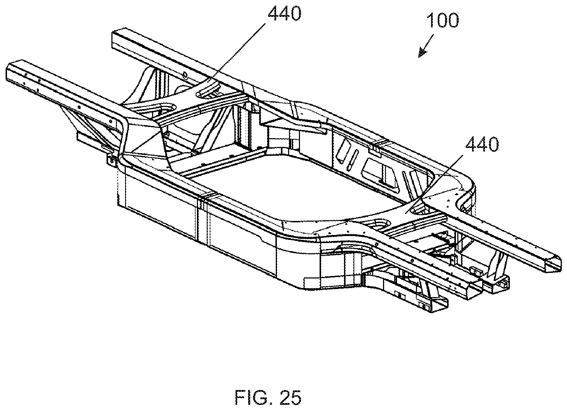

In another embodiment, the "H" 440 shaped crossbar is coupled to the rear stringer members of chassis 100, more specifically to the rear end portions 232, 242 and to rear curved portions 234, 244, and to the front stringer members of chassis 100, more specifically to the front end portions 232, 242 and to the front curved portions 234, 244. This embodiment can be observed in figure 25.

In other embodiments, the "H" 440 shaped crossbar is coupled to other regions of the two stringer assemblies of chassis 100 of the present invention. Or further, a plurality of "H" shaped crossbars is coupled to a plurality of regions of the two stringer assemblies of chassis 100 of the present invention.

Just like the "X" 420 crossbar, the "H" 440 crossbar is a component which provides torsional rigidity to chassis 100. This increase in torsional rigidity cannot be achieved by the single bar crossbars known from the state of the art.

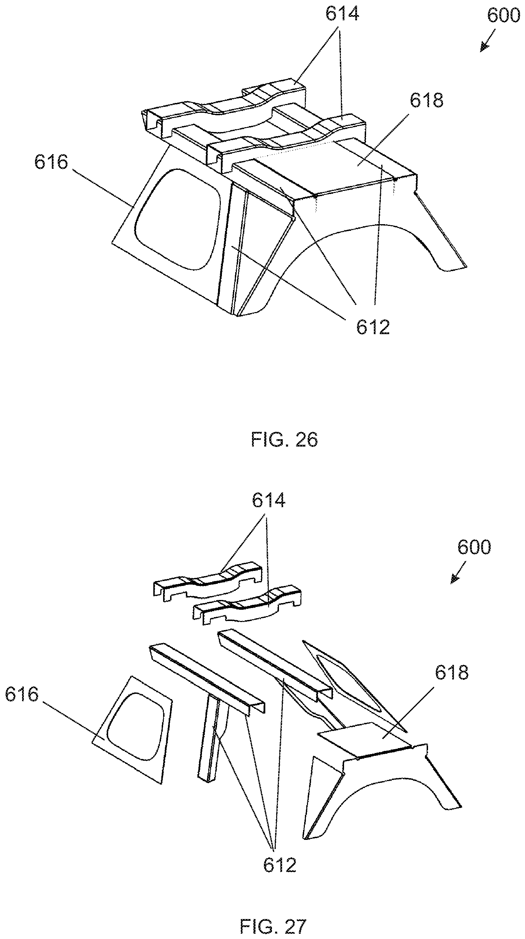

Figures 26 and 27 illustrate perspective and exploded views respectively of the set of closure reinforcing members 600 of chassis 100 according to an embodiment of the present invention. The set of closure reinforcing members 600 is the frame component wherein there are installed suspensions and/or axles of the vehicles comprising chassis 100 of the present invention.

The set of closure reinforcing members 600 comprises reinforcing bars 612 which form the structure of the set of closure reinforcing members 600. The reinforcing bars 612 are coupled to reinforcing crossbars 614 which complement the structure and increase the rigidity of the set of closure reinforcing members 600. The set of closure reinforcing members 600 further comprises side closure reinforcing members 616 and a lower closure reinforcing member 618.

The side closure reinforcing members 615 are flat plates coupled to reinforcing bars 612. The side closure reinforcing members 616 comprise internal openings which reduce the weight of this component without compromising the structural rigidity thereof.

The lower closure reinforcing member 618 is a flat plate coupled to reinforcing bars 612 and to at least one reinforcing crossbar of the set of closure reinforcing members 600.

The side closure reinforcing members 616 and the lower closure reinforcing member 618 provide to the set of closure reinforcing members 600 a significant increase in rigidity which translates into a significant increase in rigidity of chassis 100 of the present invention as a whole.

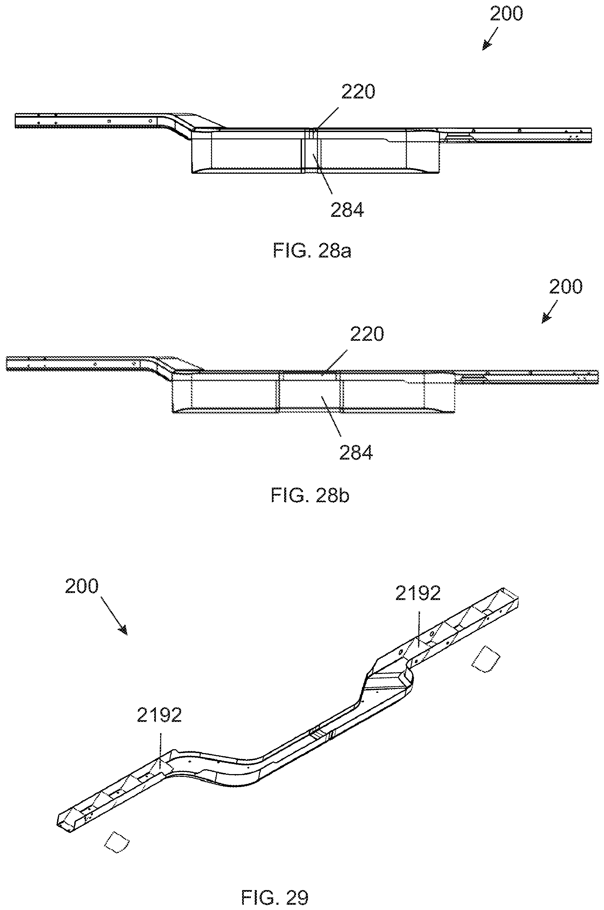

Figures 28a and 28b illustrate side views of the stringer assembly 200 according to the different embodiments of the present invention. As can be observed, the central connection of stringer 220 and the central reinforcing connection 284 can have their longitudinal length altered. In this way, the total longitudinal length of the stringer, of the stringer assembly 200 and, consequently, of chassis 100 can be altered. Thus, by comprising the central stringer connection 220 and the central reinforcing connection 284, the stringer and/or chassis 100 of the present invention can have their total length altered to adapt to the desired design conditions without the need for a structural modification of countless construction components of the more complex construction of chassis 100. Said characteristic grants versatility to chassis 100 of the present invention.

Figure 29 illustrates a lower perspective view of an embodiment of stringer of the present invention. As already described, the stringer comprises a "C" shaped cross section horizontally downwards. This configuration creates an internal space in the lower region of the stringer defined by the upper wall and the side walls. In an embodiment, the stringer comprises additional reinforcing members 2192 in the internal region. The additional reinforcing members 2192 are plates coupled to the upper wall and to the side walls of the stringer, whereby they may be coupled so as to have different inclination angles with the upper wall. The possibility of adding additional reinforcing members 2192 provides versatility to the stringer of the present invention in the sense of being able to adapt the stringer to the different rigidity needs of the designs.

Having described an example of a preferred embodiment, it should be understood that the scope of the present invention encompasses other possible variations, being limited only by the content of the accompanying claims, possible equivalents being included therein.

## Claims

1. Vehicle chassis stringer (210), **characterized by** the fact that it comprises:
a rear stringer member (230);
a front stringer member (240); and
a central stringer connection,
wherein rear stringer member (230) and front stringer member (240) are coupled to central stringer connection (220).
wherein the rear stringer member (230), the front stringer member (240) and the central stringer connection (220) comprise a "C" shaped cross section horizontally downwards formed by at least one upper flat surface and flat side surfaces.

2. Vehicle chassis stringer (210), according to claim 1, **characterized by** the fact that the rear stringer member (230) comprises a rear end portion (232), a rear curved portion (234) and a first part of central portion (236), wherein the rear end portion (232) and the first part of the central portion (236) are intermediated by rear curved portion (234), wherein the rear curved portion (234) comprises an upper wall that is wider than the upper walls of the rear end portion (232) and of the first part of central portion (236).

3. Vehicle chassis stringer (210), according to claim 1, **characterized by** the fact that the front stringer member (240) comprises a front end portion (242) and a second part of the central portion (246), wherein the front end portion (242) and the second part of central portion (246) are intermediated by a front curved portion (244), wherein the front curved portion (244) comprises an upper wall that is wider than the upper walls of front end portion (242) and of the second part of central portion (246).

4. Vehicle chassis stringer (210), according to claim 3, **characterized by** the fact that the front end portion (242), the front curved portion (244) and the second part of central portion (246) of the front member of stringer (240) comprise flat upper walls comprised within the same horizontal plane.

5. Vehicle chassis stringer (210), according to any of claims 2 to 4, **characterized by** the fact that the longitudinal axis of the first part of the central portion is aligned with the longitudinal axis of the second part of the central portion (246).

6. Vehicle chassis stringer (210), according to any of claims 1 to 5, **characterized by** the fact that the total length of the stringer (210) is altered by the variation in length of the central stringer (220) connection.

7. Stringer assembly for vehicle chassis (200), **characterized by** the fact that it comprises:
a stringer (210); and
a set of central reinforcing members (280),
wherein the stringer comprises two end portions (232, 242), two curved portions (234, 244) and a central portion (214), wherein the two curved portions (234, 244) intermediate the two end portions (232, 242) and the central portion (214), wherein the set of central reinforcing members (280) is coupled to the central portion (214) and to part of the curved portions (234, 244) of the stringer (210).

8. Stringer assembly for vehicle chassis (200), according to claim 7, **characterized by** the fact that the stringer (210) comprises a "C" shaped cross section horizontally downwards.

9. Stringer assembly for vehicle chassis (200), according to claim 7 or 8, **characterized by** the fact that the set of central reinforcing members (280) comprises a rear reinforcing member (282), a central reinforcing connection (286) and a front reinforcing member (286), wherein the rear reinforcing member (282) and the front reinforcing member (286) are coupled to the central reinforcing member (284), and wherein the rear reinforcing member (282), the front reinforcing member (286) and the central reinforcing connection (284) comprise vertically elongated bodies which comprise upper (288) and lower (289) flaps, so as to form an "I shaped cross section.

10. Stringer assembly for vehicle chassis (200), according to any of claims 7 to 9, **characterized by** the fact that it further comprises an internal reinforcing member with an "L" profile coupled to the stringer (210) and to the set of central reinforcing members (280).

11. Vehicle chassis (100), **characterized by** the fact that it comprises:
at least two stringer assemblies (200); and
at least one crossbar (400),
wherein each of the at least two stringer assemblies (200) comprises a stringer (210) and a set of central reinforcing members (280), wherein the stringer (210) comprises a "C" shaped cross section horizontally downwards and the set of central reinforcing members (280) comprises an "I" shaped cross section,
wherein the at least one crossbar (400) comprises at least one among an "X" shaped crossbar (420) and an "H" shaped crossbar (440).

12. Vehicle chassis (100), according to claim 11, **characterized by** the fact that it comprises two crossbars (400), wherein the crossbars are at least one among an "X" shaped crossbar (420) and an "H" shaped crossbar (440).

13. Vehicle chassis (100), according to claim 11 or 12, **characterized by** the fact that it comprises a set of closure reinforcing members (600), wherein the set of closure reinforcing members (600) comprises side closure reinforcing members (616) and a lower reinforcing member (618).
